(19) Europäisches Patentamt
European Patent Office
Office européen des brevets

(11) **EP 2 503 673 B1**

(12) **EUROPEAN PATENT SPECIFICATION**

(45) Date of publication and mention
of the grant of the patent:
**07.10.2015 Bulletin 2015/41**

(51) Int Cl.:
***H02K 3/28*** *(2006.01)*

(21) Application number: **12160574.5**

(22) Date of filing: **21.03.2012**

(54) **Armature winding of rotating electrical machine**

Ankerwicklung einer rotierenden elektrischen Maschine

Enroulement d'armature de machine électrique rotative

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2011 JP 2011066661**

(43) Date of publication of application:
**26.09.2012 Bulletin 2012/39**

(73) Proprietor: **Kabushiki Kaisha Toshiba**
**Tokyo 105-8001 (JP)**

(72) Inventors:
• **Tokumasu, Tadashi**
**Tokyo, 105-8001 (JP)**
• **Ueda, Takashi**
**Tokyo, 105-8001 (JP)**
• **Ichimonji, Masayuki**
**Tokyo, 105-8001 (JP)**
• **Otaka, Toru**
**Tokyo, 105-8001 (JP)**
• **Hiramatsu, Daisuke**
**Tokyo, 105-8001 (JP)**
• **Kakiuchi, Mikio**
**Tokyo, 105-8001 (JP)**

(74) Representative: **Hoffmann Eitle**
**Patent- und Rechtsanwälte PartmbB**
**Arabellastraße 30**
**81925 München (DE)**

(56) References cited:
**EP-A2- 1 128 525    US-A- 1 530 466**

• **Rudolf Richter: "Lehrbuch der Wicklungen
elektrischer Maschinen" In: "Lehrbuch der
Wicklungen elektrischer Maschinen", 1 January
1952 (1952-01-01), G. Braun, Karlsruhe,
XP055143627, page 107-120,144-147,**

EP 2 503 673 B1

**Description**

FIELD

Embodiments described herein relate generally to an armature winding of a rotating electrical machine.

BACKGROUND

In a large capacity rotating electrical machine, an armature winding includes upper and lower coil pieces formed in two layers in slots provided in an armature core configured by a laminated core, and the coil pieces are connected in series to increase a generated voltage and machine capacity. However, as a voltage of an armature winding increases, main insulation thickness becomes thick, a cross-sectional area of a conductor decreases, and a current density increases, causing an increased loss. If a voltage of an armature winding is extremely increased, the reliability of main insulation is decreased.

The number of slots is important for setting a voltage of an armature winding. In a 4-pole 3-phase machine, the number of slots is reduced to half of a 2-pole machine by using so-called integer slots, in which the number of slots can be divided by the number of poles and phases, and design flexibility is limited. To avoid such a defect, it is necessary to design a machine with fractional slots, for example, a 4-pole 54-slot machine, in which the number of slots cannot be divided by the number of poles and phases.

A magnetic flux per pole to generate the same voltage is half of a 4-pole machine compared with a 2-pole machine, and the thickness of an armature core yoke can be reduced by just that much.

In a rotating electrical machine, a magnetic flux generated in a gap between an armature and a rotor generates an electromagnetic force to attract an armature core to a rotor, and the electromagnetic force generates circular vibration when a rotor rotates. As the electromagnetic force has power proportional to a square of a magnetic flux density B, an electromagnetic force at a lowest frequency is generated by a magnetic flux element corresponding to an electrical frequency, and becomes an excitation force having a frequency double the electrical frequency. Generally, a space harmonic component of a magnetic flux in a gap is considered to be a space harmonic component of a magnetic flux Bf generated by a field current, and a space harmonic component of a magnetic flux Ba generated by an armature current. In the above space harmonic components, only a harmonic component of the magnetic flux Ba generated by an armature current corresponds to an electrical frequency. Therefore, a magnetic flux component corresponding to an electrical frequency is expressed as follows, assuming $\theta$ to be a machine angle, because a space harmonic component of a multiple of 3 is usually canceled in a 3-phase 4-pole machine.

$$B = B_1 \cos (2\theta - \omega t)$$
$$+ B_{a2} \cos (4\theta + \omega t) + B_{a4} \cos (8\theta - \omega t)$$
$$+ B_{a5} \cos (10\theta + \omega t) + B_{a7} \cos (14\theta - \omega t) + \cdots$$

Generally, a winding coefficient for an even-ordered space harmonic is zero in an integer-slot machine as shown in Table 1, and an even-ordered space harmonic component of a magnetic flux is also zero. Therefore, an electromagnetic excitation force Fa acting on an armature core is proportional to an AC component of a square of a magnetic flux density corresponding to an electrical frequency shown below.

$$B^2{}_{ac} = \frac{1}{2} B_1^2 \cos(4\theta - 2\omega t) + B_1 B_{a5} \cos(8\theta + 2\omega t) + B_1 B_{a7} \cos(16\theta - 2\omega t) + ...$$

Therefore, an electromagnetic excitation force Fa acting on an armature core is expressed as follows.

$$F_a = F_{a4} \cos(4\theta - 2\omega t) + F_{a8} \cos(8\theta + 2\omega t) + F_{a16} \cos(16\theta - 2\omega t) + \cdots$$

Here, an electromagnetic excitation force of a lowest space harmonic order is an 8-pole component (4-diameter node mode), and a 4-diameter node mode is apt to be excited for vibration of a core.

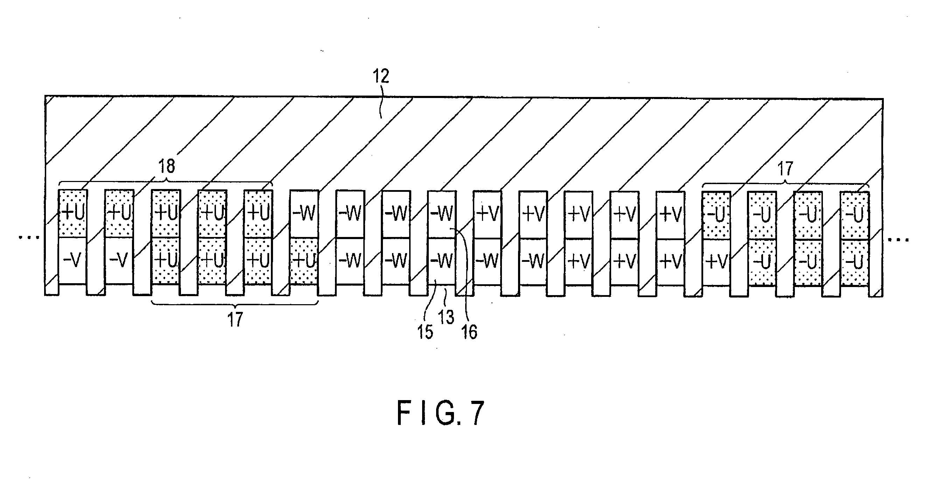

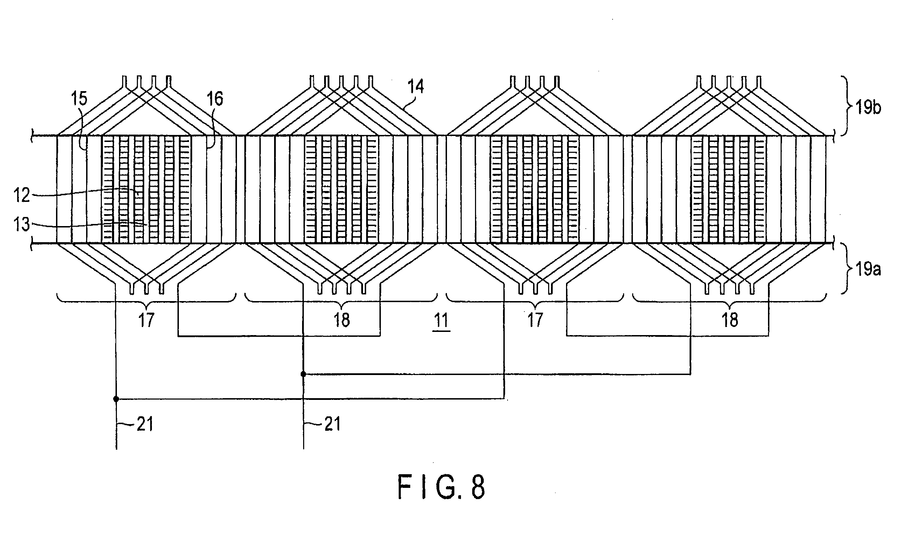

On the other hand, in a fractional-slot machine, for example a 4-pole 54-slot machine, the number of slots 54 cannot be divided by the number of poles, and a winding of each phase is wound such that a phase belt 17 including four coils and a phase belt 18 including five coils are alternately arranged in a circumferential direction, as shown in FIG. 7. Therefore, in a single-phase armature winding 14, a phase belt 17 including four coils and a phase belt 18 including five coils alternately appear corresponding to each magnetic pole position, as shown in FIG. 8. Thus, symmetry is not established for each magnetic pole, and a winding coefficient for an even-ordered space harmonic is not zero, as shown in Table 1. Consequently, an electromagnetic excitation force Fa acting on an armature core is proportional to an AC component of a square of a magnetic flux density corresponding to an electrical frequency shown below.

$$B^2{}_{ac} = \frac{1}{2}B_1^2 \cos(4\theta - 2\omega t) + B_1 B_{a2}\cos(2\theta + 2\omega t) + B_1 B_{a5}\cos(8\theta + 2\omega t) + B_1 B_{a4}\cos(10\theta - 2\omega t) +$$
$$B_1 B_{a7}\cos(16\theta - 2\omega t) + ...$$

Therefore, an electromagnetic excitation force Fa acting on an armature core is expressed as follows.

$$F_a = F_{a2}\cos(2\theta + 2\omega t) + F_{a4}\cos(4\theta - 2\omega t) + F_{a8}\cos(8\theta + 2\omega t)$$
$$+ F_{a10}\cos(10\theta - 2\omega t) + F_{a16}\cos(16\theta - 2\omega t) + \cdots$$

Here, a 4-pole component (2-diameter node mode) appears as a lowest order electromagnetic excitation force.

As a cause of an electromagnetic excitation force of a 4-pole component (2-diameter node mode), for example, the interaction between a fourth-order harmonic component Ba4 and a fifth-order harmonic component Ba5 is considerable in addition to the above-mentioned interaction between a basic wave magnetic flux density B1 and a second-order harmonic component Ba2. However, as the ratio of a basic wave B1 to a magnetic flux density is generally high, a value of second-order harmonic component Ba2 is considered to determine a value of electromagnetic excitation force of a 4-pole component (2-diameter node mode).

Table 1 Example of winding coefficient of 4-pole machine

| Kind | Slot No. | Slot pitch | Space harmonic order | | | | |
|---|---|---|---|---|---|---|---|
| | | | 1 | 2 | 4 | 5 | 7 |
| Integer slot | 48 | 10 | 0.9250 | 0.0000 | 0.0000 | 0.0531 | 0.0408 |
| Fractional slot | 54 | 11 | 0.9153 | 0.0307 | 0.0524 | 0.0225 | 0.0630 |

In circular vibration, as a mode number of diameter node mode decreases, a natural vibration frequency decreases. Therefore, it is general to detune a natural vibration frequency for a lowest order excitation frequency in an armature core. However, as described above, an armature core yoke is made thin in a 4-pole machine, and the rigidity of an armature core for circular vibration is lower than a 2-pole machine, and it is sometimes difficult to sufficiently detune a natural vibration frequency for circular vibration in 2-diameter node mode. In such a case, excessive core vibration may be induced by an electromagnetic excitation force of a 4-pole component (2-diameter node mode) generated in a fractional-slot machine.

Under the circumstances, it is desired to provide an armature winding of a rotating electrical machine, in which an electromagnetic excitation force of a 4-pole component induced by a magnetic flux generated by an armature current is decreased, vibration of an armature core is decreased, and the reliability is increased.

Documents cited during prosecution include EP 1 128 525 A2, which discloses an armature winding and a rotating electric machine using the same; US 1,530,466, which discloses an induction motor winding; and "Lehrbuch der Wicklungen elektrischer Maschinen" by Rudolf Richter.

BRIEF DESCRIPTION OF THE DRAWINGS

For a better understanding of the invention, reference will now be made, by way of example only, to the following drawings, in which:

FIG. 1 is a developed schematic diagram showing one phase of an armature winding of a rotating electrical machine according to a first embodiment;

FIG. 2 is a developed schematic diagram showing a cross section of an armature of a rotating electrical machine according to the same embodiment;

FIG. 3 is a developed schematic diagram showing one phase of an armature winding of a rotating electrical machine according to a second embodiment;

FIG. 4 is a developed schematic diagram showing one phase of an armature winding of a rotating electrical machine according to a third embodiment;

FIG. 5 is a developed schematic diagram showing one phase of an armature winding of a rotating electrical machine according to a fourth embodiment;

FIG. 6 is a developed schematic diagram showing one phase of an armature winding of a rotating electrical machine according to a fifth embodiment;

FIG. 7 is a developed schematic diagram showing a cross section of an armature of a conventional rotating electrical machine; and

FIG. 8 is a developed schematic diagram showing one phase of an armature winding of a conventional rotating electrical machine.

## DETAILED DESCRIPTION

Embodiments will be described below with reference to the drawings. In general, according to one embodiment, there is provided a 3-phase 4-pole 2-layer armature winding of a rotating electrical machine. A winding of each phase of the armature winding forms a series coil. Each series coil includes upper coil pieces and lower coil pieces which are connected each other at a connection side coil end and a counter-connection side coil end, the upper coil pieces and lower coil pieces being placed in 54 slots provided in an armature core. At least one coil piece of the upper and lower coil pieces, provided in at least one of an innermost position and an outermost position from the center of a phase belt of each phase, is replaced with a coil piece of an adjacent phase.

(First embodiment)

First, an armature winding of a rotating electrical machine according to a first embodiment will be explained.

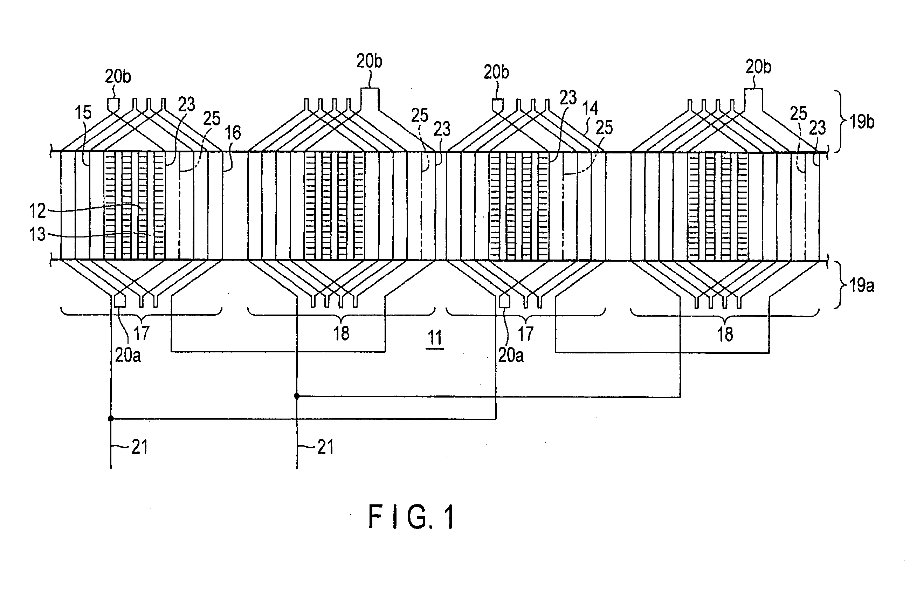

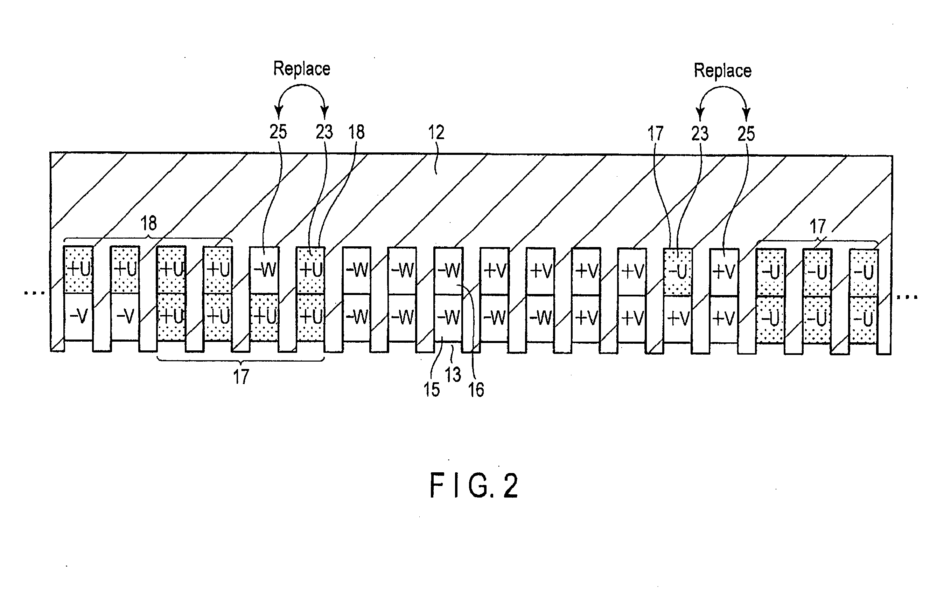

FIG. 1 is a developed schematic diagram showing one phase of an armature winding of a rotating electrical machine according to a first embodiment. FIG. 2 is a developed schematic diagram showing a cross section of an armature of a rotating electrical machine according to the same embodiment.

An armature 11 of a rotating electrical machine is provided with 54 slots 13 in an armature core 12 configured by a laminated core, and an armature winding 14 of a 4-pole 3-phase circuit is formed in two layers in slots 13.

An armature winding 14 of each phase includes upper coil pieces 15 placed in an upper part of slots 13, and lower coil pieces 16 placed in a lower part of slots 13. The ends of the upper and lower coil pieces 15 and 16 are connected in series at a connection side coil end 19a connected to a lead wire of a winding, and a counter-connection side coil end 19b opposite along a shaft and unconnected to a lead wire of a winding. Further, an armature winding 14 includes a phase belt 17 including four coils, in which upper and lower coil pieces 15 and 16 are placed in four slots 13 provided in the armature core 12, and a phase belt 18 including five coils, in which upper and lower coil pieces 15 and 16 are placed in five slots 13 provided in the armature core 12.

Upper coil pieces 15 of each of the phase belts 17 and 18 are connected to corresponding lower coil pieces 16 separated by a predetermined coil pitch, at the connection side and counter-connection side coil ends 19a and 19b, thereby forming a series coil. A phase belt 17 including four series coils and a phase belt 18 including five series coils are connected in series. Two sets of circuit including series-connected 4-coil and 5-coil phase belts 17 and 18 is connected in parallel through a lead-out conductor 21 provided at the connection side coil end 19a, thereby forming an armature winding 14. FIG. 1 shows an example using a small coil pitch 8 for convenience of viewing. A coil pitch is not to be limited to this value. This is the same in other diagrams.

In FIG. 1, two jumper wires 20a are provided per phase at a connection side coil end 19a of each of the phase belts 17 and 18, and four jumper wires 20b are provided per phase at a counter-connection side coil end 19b, and a coil position is indicated by a position from the center of phase in each phase belt. In a 4-coil phase belt 17, a lower coil piece 23 in an innermost position from the center of the phase belt is replaced with a lower coil piece 25 of a 5-coil phase belt of an adjacent different phase. In a 5-coil phase belt 18, a lower coil piece 23 in an outermost position from the center of the phase belt is replaced with a lower coil piece 25 of a 4-coil phase belt of an adjacent different phase.

Generally, in an armature winding, a coil pitch is determined to reduce fifth-order and seventh-order space winding coefficients to prevent deterioration of an induced voltage waveform and rotor surface loss. In a conventional example of a 4-pole 54-slot armature winding, only a winding with a coil pitch 11 shown in Table 1 can be selected to reduce fifth-order and seventh-order space winding coefficients to less than 10%.

Table 2 shows the relationship between a coil pitch and a winding coefficient of each order space in the first embodiment. Comparing Table 2 with Table 1, fifth-order and seventh-order space winding coefficients are reduced to less than 10% when a coil pitch is 10 to 12 in the first embodiment, and a second-order space winding coefficient is lower than a value in a conventional example shown in Table 1 in any case. Therefore, a second-order space harmonic component of a magnetic flux formed by an armature current can be reduced.

Table 2 omits other coil pitches than 9 to 14. Coil pitches other than 9 to 14 are usually not used, because a coil size becomes too large or small, or a sufficient effect is not obtained.

Table 2 Relationship between coil pitch and winding coefficient in first embodiment

| Coil pitch | 9 | 10 | 11 | 12 | 13 | 14 |
|---|---|---|---|---|---|---|
| Basic wave winding coefficient | 0.8160 | 0.8652 | 0.9028 | 0.9281 | 0.9410 | 0.9410 |
| Second-order space winding coefficient | 0.0390 | 0.0267 | 0.0139 | 0.0083 | 0.0191 | 0.0320 |
| Fifth-order space winding coefficient | 0.1335 | 0.0972 | 0.0561 | 0.0808 | 0.1245 | 0.1387 |
| Seventh-order space winding coefficient | 0.0423 | 0.0892 | 0.0995 | 0.0593 | 0.0480 | 0.0940 |

As described above, in the first embodiment, in a 4-coil phase belt 17, a lower coil piece 23 in an innermost position from the center of the phase belt is replaced with a lower coil piece 25 of a 5-coil phase belt of an adjacent different phase. In a 5-coil phase belt 18, and a lower coil piece 23 in an outermost position from the center of the phase belt is replaced with a lower coil piece 25 of a 4-coil phase belt of an adjacent different phase. A winding coefficient for a second-order space harmonic can be minimized by setting a coil pitch to 12. A second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is generated, vibration of a 2-diameter node stator core is reduced, and a reliable armature can be provided.

The embodiment is not limited to the configuration shown in the diagrams. The same function and effect can be obtained even when upper coil pieces 15 are replaced with lower coil pieces 16 in FIG. 1, and vice versa, a lower coil piece 23 replaced with a different phase is assumed to be an upper coil piece 22 replaced with a different phase, and a lower coil piece 25 of a different phase is replaced with an upper coil piece of a different phase. The function and effect are the same even when a lead-out position is changed from the diagrams. Further, in FIG. 1, two parallel windings are formed by connecting two sets of circuit including 4-coil and 5-coil phase belts 17 and 18 in parallel. The same function and effect can be obtained even when an armature winding is formed by connecting two sets of circuit in series.

(Second embodiment)

Next, an armature winding of a rotating electrical machine according to a second embodiment will be explained.

In the second embodiment, elements common to the first embodiment are given the same reference numbers, and a redundant explanation is omitted. Parts different from the first embodiment are mainly explained.

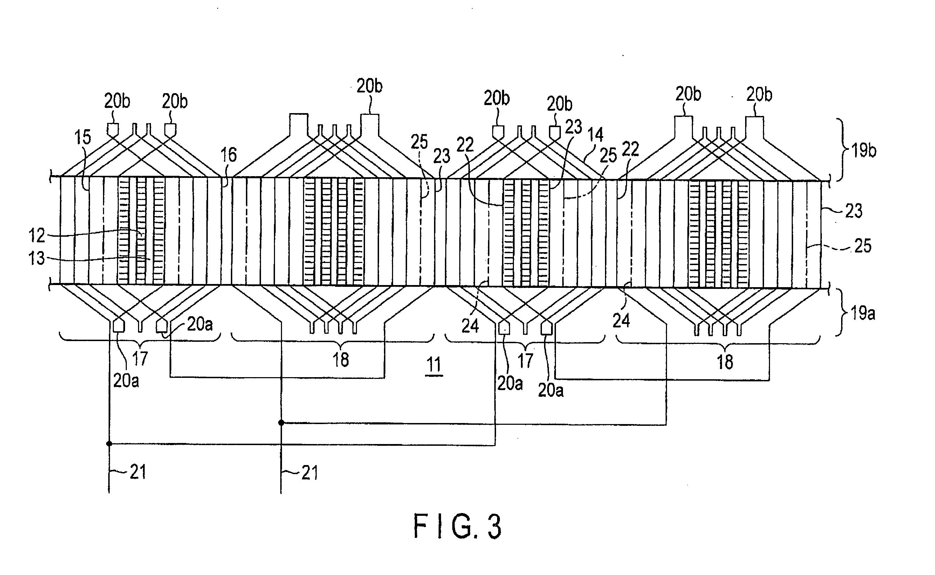

FIG. 3 is a developed schematic diagram showing one phase of an armature winding of a rotating electrical machine according to a second embodiment.

In FIG. 3, four jumper wires 20a are provided per phase at a connection side coil end 19a of each of the phase belts 17 and 18, and eight jumper wires 20b are provided per phase at a counter-connection side coil end 19b. In a 4-coil phase belt 17, an upper coil piece 22 in an innermost position from the center of the phase belt is replaced with an upper coil piece 24 of a 5-coil phase belt of an adjacent different phase, and a lower coil piece 23 in an innermost position from the center of the phase belt is replaced with a lower coil piece 25 of a 5-coil phase belt of an adjacent different phase. In a 5-coil phase belt 18, an upper coil piece 22 in an outermost position from the center of the phase belt is replaced with an upper coil piece 24 of a 4-coil phase belt of an adjacent different phase, and a lower coil piece 23 in an outermost position from the center of the phase belt is replaced with a lower coil piece 25 of a 4-coil phase belt of an adjacent different phase.

Table 3 shows the relationship between a coil pitch and a winding coefficient of each order space in the second embodiment. Comparing Table 3 with Table 1, fifth-order and seventh-order space winding coefficients are reduced to less than 10% when a coil pitch is 9 to 11 in a second embodiment, and a second-order space winding coefficient is lower than a value in a conventional example shown in Table 1. Therefore, a second-order space harmonic component of a magnetic flux formed by an armature current can be reduced.

Table 3 Relationship between coil pitch and winding coefficient in second embodiment

| Coil pitch | 9 | 10 | 11 | 12 | 13 | 14 |
|---|---|---|---|---|---|---|
| Basic wave winding coefficient | 0.8044 | 0.8531 | 0.8902 | 0.9153 | 0.9281 | 0.9282 |
| Second-order space winding coefficient | 0.0178 | 0.0014 | 0.0151 | 0.0307 | 0.0448 | 0.0564 |
| Fifth-order space winding coefficient | 0.0840 | 0.0657 | 0.0259 | 0.0225 | 0.0635 | 0.0835 |
| Seventh-order space winding coefficient | 0.0391 | 0.0105 | 0.0536 | 0.0630 | 0.0328 | 0.0179 |

As described above, in the second embodiment, in a 4-coil phase belt 17, innermost upper and lower coil pieces 22 and 23 in innermost positions from the center of the phase belt are replaced with an upper coil piece 24 and lower coil piece 25 of a 5-coil phase belt of an adjacent different phase, respectively. In a 5-coil phase belt 18, outermost upper and lower coil pieces 22 and 23 in outermost positions from the center of a phase are replaced with an upper coil piece 24 and lower coil piece 25 of a 4-coil phase belt of an adjacent different phase, respectively. A winding coefficient for a second-order space harmonic can be minimized by setting a coil pitch to 10. A second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is generated, vibration of a 2-diameter node stator core is reduced, and a reliable armature can be provided.

In the second embodiment, compared with the first embodiment, the numbers of jumper wires 20a and 20b at the connection side and counter-connection side coil ends are increased, but a second-order space harmonic component is effectively reduced, and the effect is high over a wide range of coil pitches.

The embodiment is not limited to the configuration shown in the diagrams.

The same function and effect are obtained even when a lead-out position is changed from the diagrams. Further, in FIG. 3, two parallel windings are formed by connecting two sets of circuit including 4-coil and 5-coil phase belts 17 and 18 in parallel. The same function and effect can be obtained even when an armature winding is formed by serially connecting two sets of circuit.

(Third embodiment)

Next, an armature winding of a rotating electrical machine according to a third embodiment will be explained.

In the third embodiment, elements common to the first embodiment are given the same reference numbers, and an explanation thereof is omitted. Parts different from the first embodiment are mainly explained.

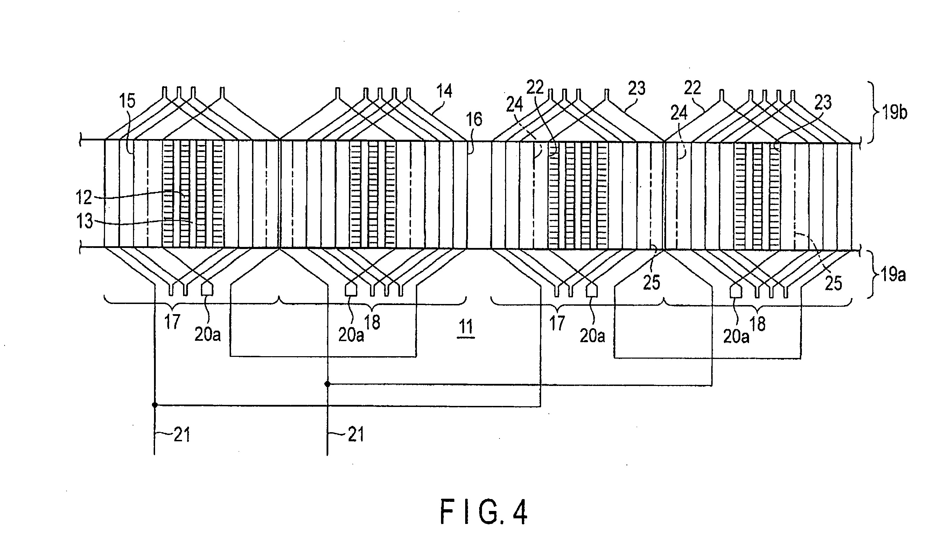

FIG. 4 is a developed schematic diagram showing one phase of an armature winding of a rotating electrical machine according to a third embodiment.

In FIG. 4, four jumper wires 20a are provided per phase at a connection side coil end 19a of each of the phase belts 17 and 18. In a 4-coil phase belt 17, an upper coil piece 22 in an innermost position from the center of a phase is replaced with an upper coil piece 24 of a 5-coil phase belt of an adjacent different phase, and a lower coil piece 23 in an outermost position from the center of the phase belt is replaced with a lower coil piece 25 of a 5-coil phase belt of an adjacent different phase. In a 5-coil phase belt 18, an upper coil piece 22 in an outermost position from the center of the phase belt is replaced with an upper coil piece 24 of a 4-coil phase belt of an adjacent different phase, and a lower coil piece 23 in an innermost position from the center of the phase belt is replaced with a lower coil piece 25 of a 4-coil phase belt of an adjacent different phase.

Table 4 shows the relationship between a coil pitch and a winding coefficient of each order space in the third embodiment. Comparing Table 4 with Table 1, fifth-order and seventh-order space winding coefficients are reduced to less than 10% when a coil pitch is 12 to 14 in the third embodiment, and a second-order space winding coefficient is lower than a value shown in a conventional example in Table 1. Therefore, a second-order space harmonic component in a magnetic flux formed by an armature current can be reduced.

Table 4 Relationship between coil pitch and winding coefficient in third embodiment

| Coil pitch | 9 | 10 | 11 | 12 | 13 | 14 |
|---|---|---|---|---|---|---|
| Basic wave winding coefficient | 0.8052 | 0.8537 | 0.8907 | 0.9156 | 0.9281 | 0.9281 |
| Second-order space winding coefficient | 0.0618 | 0.0519 | 0.0392 | 0.0244 | 0.0083 | 0.0083 |
| Fifth-order space winding coefficient | 0.0730 | 0.0379 | 0.0098 | 0.0542 | 0.0808 | 0.0808 |
| Seventh-order space winding coefficient | 0.0559 | 0.0618 | 0.0290 | 0.0221 | 0.0593 | 0.0593 |

As described above, in the third embodiment, in a 4-coil phase belt 17, an upper coil piece 22 in an innermost position and a lower coil piece 23 in an outermost position from the center of the phase belt are replaced with an upper coil piece 24 and a lower coil piece 25 of a 5-coil phase belt of an adjacent different phase, respectively. In a 5-coil phase belt 18, an upper coil piece 22 in an outermost position and a lower coil piece 23 in an innermost position from the center of the phase belt are replaced with an upper coil piece 24 and a lower coil piece 25 of a 4-coil phase belt of an adjacent different phase, respectively. A winding coefficient for a second-order space harmonic can be minimized by setting a coil pitch to 13. A second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is generated, vibration of a 2-diameter node stator core is reduced, and a reliable armature can be provided.

In the third embodiment, compared with the first and second embodiments, a jumper wire 20b at the counter-connection side coil end is unnecessary.

The embodiment is not limited to the configuration shown in the diagrams. The same function and effect can be obtained even when upper coil pieces 15 in FIG. 4 are replaced with lower coil pieces 16, an upper coil piece 22 replaced with a different phase is assumed to be a lower coil piece 23 replaced with a different phase, an upper coil piece 24 of a different phase is assumed to be a lower coil piece 25 of a different phase, lower coil pieces 16 are assumed to be upper coil pieces 15, a lower coil piece 23 replaced with a different phase is assumed to be an upper coil piece 22 replaced with a different phase, and a lower coil piece 25 of a different phase is assumed to be an upper coil piece 24 of a different phase. The function and effect are the same even when a lead-out position is changed from that shown in the diagrams. Further, in FIG. 4, two parallel windings are formed by connecting two sets of circuit including 4-coil and 5-coil phase belts 17 and 18 in parallel. The same function and effect can be obtained even when an armature winding is formed by connecting two sets of circuit in series.

(Fourth embodiment)

Next, an armature winding of a rotating electrical machine according to a fourth embodiment will be explained.

In the fourth embodiment, elements common to the first embodiment are given the same reference numbers, and an explanation thereof is omitted. Parts different from the first embodiment are mainly explained.

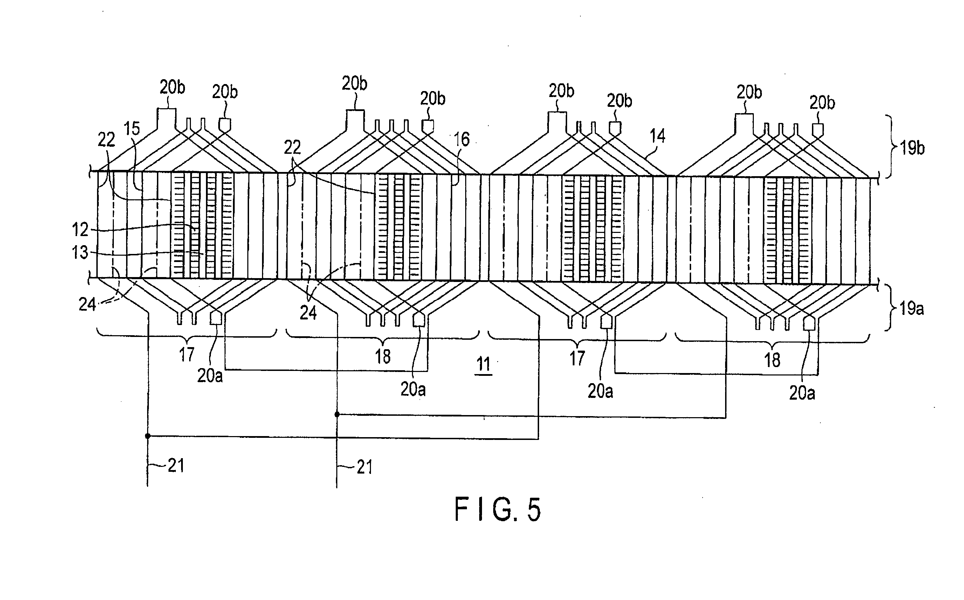

FIG. 5 is a developed schematic diagram showing one phase of an armature winding of a rotating electrical machine according to a fourth embodiment.

In FIG. 5, four jumper wires 20a are provided per phase at a connection side coil end 19a of each of the phase belts 17 and 18, and eight jumper wires 20b are provided per phase at a counter-connection side coil end 19b. In a 4-coil phase belt 17, an upper coil piece 22 in an innermost position and an upper coil piece 22 in an outermost position from the center of the phase are replaced with upper coil pieces 24 of a 5-coil phase belt of an adjacent different phase, respectively. In a 5-coil phase belt 18, an upper coil piece 22 in an innermost position and an upper coil piece 22 in an outermost position from the center of the phase belt are replaced with upper coil pieces 24 of a 4-coil phase belt of an adjacent different phase, respectively.

Table 5 shows the relationship between a coil pitch and a winding coefficient of each order space in the fourth embodiment. Comparing Table 5 with Table 1, fifth-order and seventh-order space winding coefficients are reduced to less than 10% when a coil pitch is 13 or 14 in the fourth embodiment, and a second-order space winding coefficient is lower than a value in a conventional example shown in Table 1. Therefore, a second-order space harmonic component of a magnetic flux formed by an armature current can be reduced.

Table 5 Relationship between coil pitch and winding coefficient in fourth embodiment

| Coil pitch | 9 | 10 | 11 | 12 | 13 | 14 |
|---|---|---|---|---|---|---|
| Basic wave winding coefficient | 0.8053 | 0.8537 | 0.8907 | 0.8902 | 0.9281 | 0.9281 |
| Second-order space winding coefficient | 0.0434 | 0.0366 | 0.0279 | 0.0180 | 0.0083 | 0.0083 |
| Fifth-order space winding coefficient | 0.0885 | 0.1101 | 0.1165 | 0.1023 | 0.0808 | 0.0808 |
| Seventh-order space winding coefficient | 0.0745 | 0.0433 | 0.1327 | 0.1395 | 0.0593 | 0.0593 |

As described above, in the fourth embodiment, in a 4-coil phase belt 17, an upper coil piece 22 in an innermost position and an upper coil piece 22 in an outermost position from the center of the phase belt are replaced with upper coil pieces 24 of a 5-coil phase belt of an adjacent different phase, respectively. In a 5-coil phase belt 18, an upper coil piece 22 in an innermost position and an upper coil piece 22 in an outermost position from the center of a phase are replaced with upper coil pieces 24 of a 4-coil phase belt of an adjacent different phase, respectively. A winding coefficient for a second-order space harmonic can be minimized by setting a coil pitch to 13. A second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is generated, vibration of a 2-diameter node stator core is reduced, and a reliable armature can be provided.

The embodiment is not limited to the configuration shown in the diagrams. The same function and effect can be obtained even when upper coil pieces 15 in FIG. 5 are assumed to be lower coil pieces 16, an upper coil piece 22 replaced with a different phase is assumed to be a lower coil piece 23 replaced with a different phase, an upper coil piece 24 of a different phase is assumed to be a lower coil piece 25 of a different phase, and lower coil pieces 16 are assumed to be upper coil pieces 15. The function and effect are the same even when a lead-out position is changed from the diagrams. Further, in FIG. 5, two parallel windings are formed by connecting two sets of circuit including 4-coil and 5-coil phase belts 17 and 18 in parallel. The same function and effect can be obtained even when an armature winding is formed by connecting two sets of circuit in series.

(Fifth embodiment)

Next, an armature winding of a rotating electrical machine according to a fourth embodiment will be explained.

In the fifth embodiment, elements common to the first embodiment are given the same reference numbers, and an explanation thereof is omitted. Parts different from the first embodiment are mainly explained.

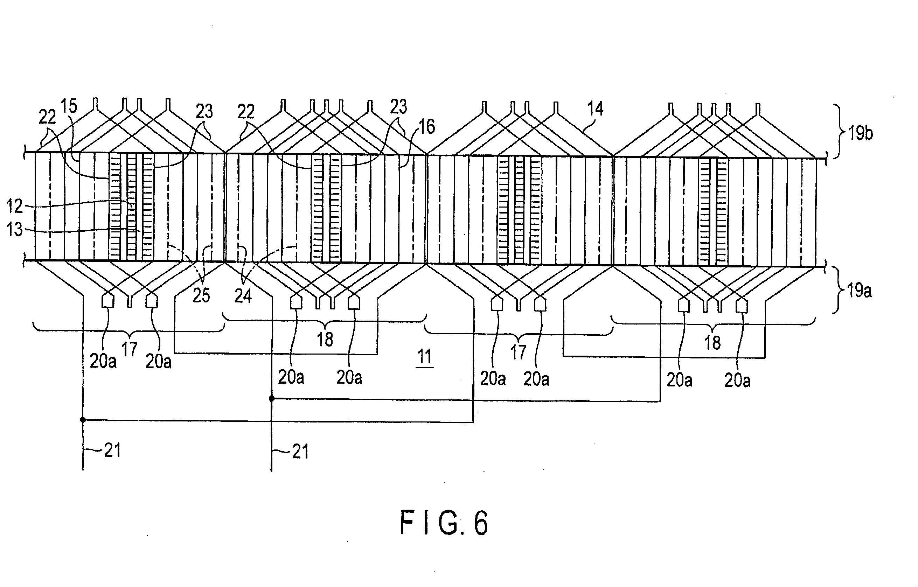

FIG. 6 is a developed schematic diagram showing one phase of an armature winding of a rotating electrical machine according to the fourth embodiment.

In FIG. 6, eight jumper wires 20a are provided per phase at a connection side coil end 19a of each of the phase belts 17 and 18. In a 4-coil phase belt 17, an upper coil piece 22 in an innermost position and a lower coil piece 23 in an outermost position from the center of the phase are replaced with an upper coil piece 24 and a lower coil piece 25 of a 5-coil phase belt of an adjacent different phase, respectively. In a 5-coil phase belt 18, an upper coil piece 22 in an innermost position and a lower coil piece 23 in an outermost position from the center of the phase belt are replaced with an upper piece 24 and a lower coil piece 25 of a 4-coil phase belt of an adjacent different phase, respectively.

Table 6 shows the relationship between a coil pitch and a winding coefficient of each order space in the fifth embodiment. Comparing Table 6 with Table 1, fifth-order and seventh-order space winding coefficients are reduced to less than 10% when a coil pitch is 11 or 12 in the third embodiment, and a second-order space winding coefficient is lower than a value in a conventional example shown in Table 1. Therefore, a second-order space harmonic component of a magnetic flux formed by an armature current can be reduced.

Table 6 Relationship between coil pitch and winding coefficient in fifth embodiment

| Coil pitch | 9 | 10 | 11 | 12 | 13 | 14 |
|---|---|---|---|---|---|---|
| Basic wave winding coefficient | 0.7829 | 0.8300 | 0.8660 | 0.8902 | 0.9024 | 0.9024 |
| Second-order space winding coefficient | 0.0381 | 0.0320 | 0.0242 | 0.0151 | 0.0051 | 0.0051 |
| Fifth-order space winding coefficient | 0.0349 | 0.0181 | 0.0047 | 0.0259 | 0.0386 | 0.0386 |
| Seventh-order space winding coefficient | 0.1356 | 0.1500 | 0.0703 | 0.0536 | 0.1438 | 0.1438 |

As described above, in the fifth embodiment, in a 4-coil phase belt 17, a coil piece 22 in an innermost position and a coil piece 23 in an outermost position from the center of the phase belt are replaced with an upper coil piece 24 and a lower coil piece 25 of a 5-coil phase belt of an adjacent different phase, respectively. In a 5-coil phase belt 18, an upper coil piece 22 in an innermost position and a lower coil piece 23 in an outermost position from the center of the phase belt are replaced with an upper coil piece 24 and a lower coil piece 25 of a 4-coil phase belt of an adjacent different phase, respectively. A winding coefficient for a second-order space harmonic can be reduced. When a coil pitch is set to 13, a winding coefficient of a seventh-order space harmonic is increased, but a winding coefficient of a second-order space harmonic can be minimized. Therefore, a second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is generated, vibration of a 2-diameter node stator core is reduced, and a reliable armature can be provided.

In the fifth embodiment, compared with the first, second and fourth embodiments, a jumper wire 20b at the counter-connection side coil end is unnecessary.

The embodiment is not limited to the configuration shown in the diagrams. The function and effect are the same even when a lead-out position is changed from that shown in the diagrams. Further, in FIG. 6, two parallel windings are formed by connecting two sets of circuit including 4-coil and 5-coil phase belts 17 and 18 in parallel. The same function and effect can be obtained even when an armature winding is formed by connecting two sets of circuit in series.

As explained in detail hereinbefore, according to each embodiment, there can be provided an armature winding of a rotating electrical machine, in which an electromagnetic excitation force of 4-pole components caused by a magnetic flux generated by an armature current is decreased, vibration of an armature core is decreased, and the reliability is increased.

While certain embodiments have been described, these embodiments have been presented by way of example only, and are not intended to limit the scope of the inventions.

**Claims**

1. A 3-phase 4-pole 2-layer armature winding (14) of a rotating electrical machine, a winding of each phase of the armature winding (14) forming a series coil, each series coil comprising:

   upper coil pieces (15) and lower coil pieces (16) which are connected to each other at a connection side coil end (19a) and a counter-connection side coil end (19b), the upper coil pieces (15) and lower coil pieces (16) being placed in 54 slots (13) provided in an armature core (12), **characterized in that** at least one coil piece (22 or 23) of the upper or lower coil pieces (15, 16), provided in at least one of an innermost position or an outermost position from the center of a phase belt of each phase, being replaced with a coil piece (24 or 25) of an adjacent phase.

2. The armature winding (14) of the rotating electrical machine according to claim 1, **characterized in that** in the upper coil pieces (15) or the lower coil pieces (16) of each phase, a coil piece (22 or 23) in an outermost position from the center of a phase belt of each phase is replaced with a coil piece (24 or 25) of an adjacent phase, in a 5-coil phase belt, and a coil piece (22 or 23) in an innermost position from the center of a phase belt of each phase is replaced with a coil piece (24 or 25) of an adjacent phase, in a 4-coil phase belt.

3. The armature winding (14) of the rotating electrical machine according to claim 2, **characterized in that** a coil pitch is set to one of 10 to 12.

4. The armature winding (14) of the rotating electrical machine according to one of claims 1 to 3, **characterized in that** outermost upper and lower coil pieces (22, 23) in outermost positions from the center of a phase belt of each phase are replaced with coil pieces (24, 25) of an adjacent phase, in a 5-coil phase belt, and innermost upper and lower coil pieces (22, 23) in innermost positions from the center of a phase belt of each phase are replaced with coil pieces (24, 25) of an adjacent phase, in a 4-coil phase belt.

5. The armature winding (14) of the rotating electrical machine according to claim 4, **characterized in that** a coil pitch is set to one of 9 to 11.

6. The armature winding (14) of the rotating electrical machine according to one of claims 1 to 5, **characterized in that** an upper coil piece (22) in an outermost position and a lower coil piece (23) in an innermost position, or a lower coil piece (23) in an outermost position and an upper coil piece (22) in an innermost position, from the center of a phase belt of each phase are replaced with coil pieces of an adjacent phase, in a 5-coil phase belt, and an upper coil piece (22) in an innermost position and a lower coil piece (23) in an outermost position, or an upper coil piece (22) in an outermost position and a lower coil piece (23) in an innermost position, from the center of a phase belt of each phase are replaced with coil pieces of an adjacent phase, in a 4-coil phase belt.

7. The armature winding (14) of the rotating electrical machine according to claim 6, **characterized in that** a coil pitch is set to one of 12 to 14.

8. The armature winding (14) of the rotating electrical machine according to one of claims 1 to 7, **characterized in that** in the upper coil pieces (15) or the lower coil pieces (16) in a phase belt of each phase, a coil piece in an outermost position (22 or 23) and a coil piece (22 or 23) in an innermost position from the center of a phase belt of each phase are replaced with coil pieces (24 or 25) of an adjacent phase.

**9.** The armature winding (14) of the rotating electrical machine according to claim 8, **characterized in that** a coil pitch is set to one of 13 and 14.

**10.** The armature winding (14) of the rotating electrical machine according to one of claims 1 to 9, **characterized in that** innermost upper and lower coil pieces (22, 23) in innermost positions and outermost upper and lower coil pieces (22, 23) in outermost positions from the center of a phase belt are replaced with coil pieces (24, 25) of an adjacent phase.

**11.** The armature winding (14) of the rotating electrical machine according to claim 10, **characterized in that** a coil pitch is set to one of 11 or 12.

**Patentansprüche**

**1.** 3-Phasen- 4-Pole- 2-Schicht-Ankerwicklung (14) einer rotierenden elektrischen Maschine, wobei eine Wicklung jeder Phase der Ankerwicklung (14) eine Reihenschlussspule ausbildet und jede Reihenschlussspule aufweist:

obere Spulenstücke (15) und untere Spulenstücke (16), welche an einem Verbindungs-seitigen Spulenende (19a) und einem gegen-Verbindungs-seitigen Spulenende (19b) miteinander verbunden sind, wobei die oberen Spulenstücke (15) und die unteren Spulenstücke (16) in 54 Schlitzen (13) angeordnet sind, die in einem Ankerkern (12) angeordnet sind,
**dadurch gekennzeichnet, dass** zumindest ein Spulenstück (22 oder 23) der oberen oder unteren Spulenstücke (15, 16), das an einer am weitesten innenliegenden Position und/oder einer am weitesten außenliegenden Position von der Mitte eines Phasenbands jeder Phase angeordnet ist, mit einem Spulenstück (24 oder 25) einer angrenzenden Phase ersetzt ist.

**2.** Ankerwicklung (14) einer rotierenden elektrischen Maschine nach Anspruch 1 **dadurch gekennzeichnet, dass** in den oberen Spulenstücken (15) oder den unteren Spulenstücken (16) jeder Phase in einem 5-Spulen Phasenband ein Spulenstück (22 oder 23) an einer von der Mitte eines Phasenbands jeder Phase am weitesten außenliegenden Position mit einem Spulenstück (24 oder 25) einer angrenzenden Phase ersetzt ist, und in einem 4-Spulen Phasenband ein Spulenstück (22 oder 23) an einer von der Mitte eines Phasenbands jeder Phase am weitesten innenliegenden Position mit einem Spulenstück (24 oder 25) einer angrenzenden Phase ersetzt ist.

**3.** Ankerwicklung (14) einer rotierenden elektrischen Maschine nach Anspruch 2 **dadurch gekennzeichnet, dass** eine Spulenweite auf einen Wert aus 10 bis 12 gesetzt ist.

**4.** Ankerwicklung (14) einer rotierenden elektrischen Maschine nach einem der Ansprüche 1 bis 3 **dadurch gekennzeichnet, dass**
in einem 5-Spulen Phasenband zu äußerste obere und untere Spulenstücke (22, 23) an von der Mitte eines Phasenbands jeder Phase am weitesten außenliegenden Positionen mit Spulenstücken (24, 25) einer angrenzenden Phase ersetzt sind, und
in einem 4-Spulen Phasenband zu innerste obere und untere Spulenstücke (22, 23) an von der Mitte eines Phasenbands jeder Phase am weitesten innenliegenden Positionen mit Spulenstücken (24, 25) einer angrenzenden Phase ersetzt sind.

**5.** Ankerwicklung (14) einer rotierenden elektrischen Maschine nach Anspruch 4 **dadurch gekennzeichnet, dass** eine Spulenweite auf einen Wert aus 9 bis 11 gesetzt ist.

**6.** Ankerwicklung (14) einer rotierenden elektrischen Maschine nach einem der Ansprüche 1 bis 5 **dadurch gekennzeichnet, dass**
in einem 5-Spulen Phasenband ein oberes Spulenstück (22) an einer am weitesten außenliegenden Position und ein unteres Spulenstück (23) an einer am weitesten innenliegenden Position oder ein unteres Spulenstück (23) an einer am weitesten außenliegenden Position und ein oberes Spulenstück (22) an einer am weitesten innenliegenden Position, von der Mitte eines Phasenbands jeder Phase, mit Spulenstücken einer angrenzenden Phase ersetzt sind, und
in einem 4-Spulen Phasenband ein oberes Spulenstück (22) an einer am weitesten innenliegenden Position und ein unteres Spulenstück (23) an einer am weitesten außenliegenden Position oder ein oberes Spulenstück (22) an einer am weitesten außenliegenden Position und ein unteres Spulenstück (23) an einer am weitesten innenliegenden Position, von der Mitte eines Phasenbands jeder Phase, mit Spulenstücken einer angrenzenden Phase ersetzt sind.

7. Ankerwicklung (14) einer rotierenden elektrischen Maschine nach Anspruch 6 **dadurch gekennzeichnet, dass** eine Spulenweite auf einen Wert aus 12 bis 14 gesetzt ist.

8. Ankerwicklung (14) einer rotierenden elektrischen Maschine nach einem der Ansprüche 1 bis 7 **dadurch gekennzeichnet, dass** in den oberen Spulenstücken (15) oder den unteren Spulenstücken (16) in einem Phasenband jeder Phase ein Spulenstück an einer am weitesten außenliegenden Position (22 oder 23) und ein Spulenstück (22 oder 23) an einer am weitesten innenliegenden Position, von der Mitte eines Phasenbands jeder Phase, mit Spulenstücken (24 oder 25) einer angrenzenden Phase ersetzt sind.

9. Ankerwicklung (14) einer rotierenden elektrischen Maschine nach Anspruch 8 **dadurch gekennzeichnet, dass** eine Spulenweite auf einen Wert aus 13 und 14 gesetzt ist.

10. Ankerwicklung (14) einer rotierenden elektrischen Maschine nach einem der Ansprüche 1 bis 9 **dadurch gekennzeichnet, dass** zu innerste obere und untere Spulenstücke (22, 23) an am weitesten innenliegenden Positionen und zu äußerste obere und untere Spulenstücke (22, 23) an am weitesten außenliegenden Positionen, von der Mitte eines Phasenbands, mit Spulenstücken (24, 25) einer angrenzenden Phase ersetzt sind.

11. Ankerwicklung (14) einer rotierenden elektrischen Maschine nach Anspruch 10 **dadurch gekennzeichnet, dass** eine Spulenweite auf einen Wert aus 11 oder 12 gesetzt ist.

## Revendications

1. Enroulement d'induit à deux couches quatre pôles triphasé (14) d'une machine électrique tournante, un enroulement de chaque phase de l'enroulement d'induit (14) formant une bobine série, chaque bobine série comprenant :

   les éléments de bobine supérieurs (15) et les éléments de bobine inférieurs (16) qui sont connectés les uns aux autres à une extrémité de bobine côté connexion (19a) et une extrémité de bobine côté contre-connexion (19b), les éléments de bobine supérieurs (15) et les éléments de bobine inférieurs (16) étant placés dans 54 encoches (13) prévues dans un noyau d'induit (12), **caractérisé en ce que**
   au moins un élément de bobine (22 ou 23) des éléments de bobine supérieurs ou inférieurs (15, 16), prévu à au moins l'une d'une position la plus à l'intérieur ou d'une position la plus à l'extérieur par rapport au centre d'un bobinage de phase de chaque phase, étant remplacé par un élément de bobine (24 ou 25) d'une phase adjacente.

2. Enroulement d'induit (14) de la machine électrique tournante selon la revendication 1, **caractérisé en ce que**, dans les éléments de bobine supérieurs (15) ou les éléments de bobine inférieurs (16) de chaque phase, un élément de bobine (22 ou 23) à une position la plus à l'extérieur par rapport au centre d'un bobinage de phase de chaque phase est remplacé par un élément de bobine (24 ou 25) d'une phase adjacente, dans un bobinage de phase de 5 bobines, et un élément de bobine (22 ou 23) à une position la plus à l'intérieur par rapport au centre d'un bobinage de phase de chaque phase est remplacé par un élément de bobine (24 ou 25) d'une phase adjacente dans un bobinage de phase de 4 bobines.

3. Enroulement d'induit (14) de la machine électrique tournante selon la revendication 2, **caractérisé en ce qu'**un pas de bobine est fixé à l'un de 10 à 12.

4. Enroulement d'induit (14) de la machine électrique tournante selon l'une des revendications 1 à 3, **caractérisé en ce que**
   les éléments de bobine supérieurs et inférieurs les plus à l'extérieur (22, 23) aux positions les plus à l'extérieur par rapport au centre d'un bobinage de phase de chaque phase sont remplacés par les éléments de bobine (24, 25) d'une phase adjacente, dans un bobinage de phase de 5 bobines, et
   les éléments de bobine supérieurs et inférieurs les plus à l'intérieur (22, 23) aux positions les plus à l'intérieur par rapport au centre d'un bobinage de phase de chaque phase sont remplacés par les éléments de bobine (24, 25) d'une phase adjacente, dans un bobinage de phase de 4 bobines.

5. Enroulement d'induit (14) de la machine électrique tournante selon la revendication 4, **caractérisé en ce qu'**un pas de bobine est fixé à l'un de 9 à 11.

6. Enroulement d'induit (14) de la machine électrique tournante selon l'une des revendications 1 à 5, **caractérisé en ce que**
un élément de bobine supérieur (22) à une position la plus à l'extérieur et un élément de bobine inférieur (23) à une position la plus à l'intérieur, ou un élément de bobine inférieur (23) à une position la plus à l'extérieur et un élément de bobine supérieur (22) à une position la plus à l'intérieur, par rapport au centre d'un bobinage de phase de chaque phase sont remplacés par les éléments de bobine d'une phase adjacente, dans un bobinage de phase de 5 bobines, et un élément de bobine supérieur (22) à une position la plus à l'intérieur et un élément de bobine inférieur (23) à une position la plus à l'extérieur, ou un élément de bobine supérieur (22) à une position la plus à l'extérieur et un élément de bobine inférieur (23) à une position la plus à l'intérieur, par rapport au centre d'un bobinage de phase de chaque phase sont remplacés par les éléments de bobine d'une phase adjacente, dans un bobinage de phase de 4 bobines.

7. Enroulement d'induit (14) de la machine électrique tournante selon la revendication 6, **caractérisé en ce qu'**un pas de bobine est fixé à l'un de 12 à 14.

8. Enroulement d'induit (14) de la machine électrique tournante selon l'une des revendications 1 à 7, **caractérisé en ce que**, dans les éléments de bobine supérieurs (15) ou les éléments de bobine inférieurs (16) dans un bobinage de phase de chaque phase, un élément de bobine à une position la plus à l'extérieur (22 ou 23) et un élément de bobine (22 ou 23) à une position la plus à l'intérieur par rapport au centre d'un bobinage de phase de chaque phase sont remplacés par les éléments de bobine (24 ou 25) d'une phase adjacente.

9. Enroulement d'induit (14) de la machine électrique tournante selon la revendication 8, **caractérisé en ce qu'**un pas de bobine est fixé à l'un de 13 et 14.

10. Enroulement d'induit (14) de la machine électrique tournante selon l'une des revendications 1 à 9, **caractérisé en ce que** les éléments de bobine supérieurs et inférieurs les plus à l'intérieur (22, 23) aux positions les plus à l'intérieur et les éléments de bobine supérieurs et inférieurs les plus à l'extérieur (22, 23) aux positions les plus à l'extérieur par rapport au centre d'un bobinage de phase sont remplacés par les éléments de bobine (24, 25) d'une phase adjacente.

11. Enroulement d'induit (14) de la machine électrique tournante selon la revendication 10, **caractérisé en ce qu'**un pas de bobine est fixé à l'un de 11 ou 12.

F I G. 1

EP 2 503 673 B1

F I G. 2

F I G. 3

EP 2 503 673 B1

FIG. 4

F I G. 5

EP 2 503 673 B1

FIG. 6

EP 2 503 673 B1

FIG.7

F I G. 8

EP 2 503 673 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1128525 A2
- US 1530466 A